(19) Europäisches Patentamt

European Patent Office

Office européen des brevets

(11) **EP 2 891 996 A1**

(12) # EUROPEAN PATENT APPLICATION
published in accordance with Art. 153(4) EPC

(43) Date of publication:
**08.07.2015 Bulletin 2015/28**

(21) Application number: **12883549.3**

(22) Date of filing: **30.08.2012**

(51) Int Cl.:
*G06F 17/50* [(2006.01)]  *G01R 33/14* [(2006.01)]
*H01F 1/16* [(2006.01)]  *H01F 41/00* [(2006.01)]

(86) International application number:
**PCT/JP2012/072083**

(87) International publication number:
**WO 2014/033888 (06.03.2014 Gazette 2014/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventor: **FURUYA, Atsushi**
**Kawasaki-shi**
**Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(54) **SIMULATION PROGRAM, SIMULATION DEVICE, AND SIMULATION METHOD FOR MAGNETIC MATERIAL**

(57)    A magnetic body simulation apparatus (200) includes a generating unit (801) that generates an easy axis vector in an area divided from an element of a group elements forming a magnetic body; a selecting unit (802) that calculates magnetic energy for each magnetization of the divided area, and selects from the calculated magnetic energies, a magnetic energy that is not the greatest; an identifying unit (803) that based on the magnetization of an area and a specific easy axis vector in a case of the selected magnetic energy, identifies a reversal angle of magnetization reversal according to a height of an energy barrier that is consequent to pinning in the area; and a reversing unit (805) that reverses the magnetization by the reversal angle identified by the identifying unit.

FIG.8

500

```
  801          802           803          805
  ┌─────────┐  ┌─────────┐  ┌───────────┐ ┌──────────┐
  │GENERATING│─│SELECTING│─│IDENTIFYING│─│REVERSING │
  │  UNIT    │  │  UNIT   │  │   UNIT    │ │   UNIT   │
  └─────────┘  └─────────┘  └───────────┘ └──────────┘
                                 │             │
                                 │    804      │
                            ┌───────────┐      │
                            │ REVERSAL  │      │
                            │  JUDGING  │──────┘
                            │   UNIT    │
                            └───────────┘
```

EP 2 891 996 A1

**Description**

TECHNICAL FIELD

The present invention related to a magnetic body simulation program, simulation apparatus, and simulation method.

BACKGROUND ART

The simulation of electronic devices, such as motors and power generators, that use magnetic material has become widely performed in various contexts consequent to improved computer performance and advances in electromagnetic analysis techniques. The finite difference method and finite element method are generally used as electromagnetic analysis techniques. Recently, electronic device efficiency has become extremely important as a means to curb $CO_2$ and prevent global warming and therefore, expectations for simulation have become high.

The most commonly used material in devices, such as motors and transformers, to which a low-frequency alternating current is input is electrical steel sheeting. Electrical steel sheeting is steel whose conversion efficiency of electrical energy and magnetic energy has been increased. Magnetic anisotropy is a problem that arises when the hysteresis of electrical steel sheeting is represented. Electrical steel sheeting includes two types: grain-oriented electrical steel sheeting for which magnetic characteristics are good with respect to a specific direction, and non-oriented electrical steel sheeting for which magnetic characteristics are good to a certain extent with respect any direction. In particular, with grain-oriented electrical steel sheeting, the magnetization curve varies drastically consequent to the magnetic field application direction.

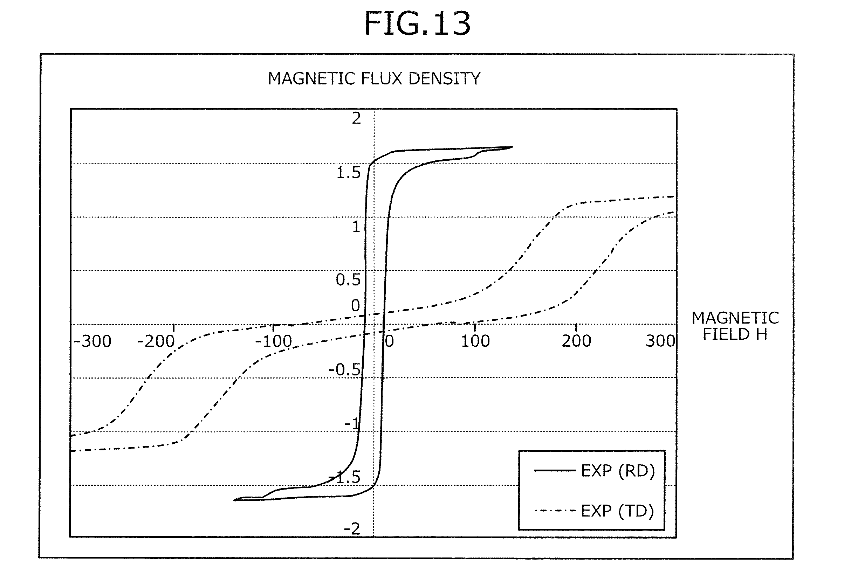

FIG. 13 is a graph depicting one example of a magnetization curve for grain-oriented electrical steel sheeting. A stop model is one method of coping with such a hysteresis curve by numerical computation. This method is used as a method of expressing arbitrary hysteresis characteristics from a mathematical perspective (for example, refer to Non-patent Literature 1).

Further, a technique based on micromagnetics has been disclosed as a technique to model from a microscopic perspective (for example, refer to Patent Document 1). The conventional technique of Patent Document 1 addresses domain wall displacement in a simplified manner.

Patent Document 1: Published Japanese-Translation of PCT Application, Publication No. 2011/114492

Non-patent Literature 1: Tetsuji Matsuo, Masaaki Shimasaki, "Representation Theorems for Stop and Play Models With Input-Dependent Shape Functions", IEEE TRANSACTIONS ON MAGNETICS, VOL. 41, NO. 5, MAY 2005, Pages 1548-1551

DISCLOSURE OF INVENTION

PROBLEM TO BE SOLVED BY THE INVENTION

Nonetheless, with the conventional technique of Non-patent Literature 1, a problem arises in that when the hysteresis curve is numerically computed, the hysteron distribution has to be obtained and numerous measurements are required to identify the hysteron distribution. Further, concerning the magnetic characteristics of a magnetic body to be measured, although attributable to the microscopic crystalline structure of the material, the characteristics in a case where the crystalline structure has changed cannot be measured.

Further, with the conventional technique of Patent Document 1, the orientation dependency of magnetic characteristics seen with grain-oriented electrical steel sheeting and non-oriented electrical steel sheeting cannot be reproduced. Therefore, in the conventional technique of Non-patent Literature 1, even if the conventional technique of Patent Document 1 is applied, a problem arises in that determining the extent to which the characteristics change consequent to how the crystalline structure varies is difficult.

In one aspect, one object is to provide a magnetic body simulation program, simulation apparatus, and simulation method that with high accuracy, can reproduce the orientation dependency in a magnetic body.

MEANS FOR SOLVING PROBLEM

According to one aspect of the present invention, a magnetic body simulation program, simulation apparatus, and simulation method that generate an easy axis vector in an area divided from an element of a group elements forming a magnetic body; calculate magnetic energy for each magnetization of the divided area, and select from the calculated magnetic energies, a magnetic energy that is not the greatest; identify based on the magnetization of an area and a specific easy axis vector in a case of the selected magnetic energy, a reversal angle of magnetization reversal according to a height of an energy barrier that is consequent to pinning in the area; and reverse the magnetization by the reversal angle identified by the identifying unit are proposed.

According to one aspect, an effect is achieved in that the orientation dependency in a magnetic body can be reproduced with high accuracy.

BRIEF DESCRIPTION OF DRAWINGS

FIG. 1 is a diagram depicting one example of simulation according to a first embodiment;
FIG. 2 is a block diagram depicting an example of a hardware structure of a simulation apparatus 200 that executes simulation;
FIG. 3 is a diagram depicting an example of system configuration using the simulation apparatus 200 depicted in FIG. 2;
FIG. 4 is a diagram depicting one example of the contents stored in a magnetic body DB;
FIG. 5 is a block diagram depicting an example of a functional configuration of the simulation apparatus 200 according to the present embodiment;
FIG. 6 is a graph of a hysteresis curve by direct current to ferrite and the actual measured data, at 1.0MHz, of the hysteresis curve;
FIG. 7 is a graph depicting simulation results of the present embodiment;
FIG. 8 is a block diagram depicting an example of a functional configuration of a reversal processing unit 500 depicted in FIG. 5;
FIG. 9 is a flowchart depicting an example of a procedure of a simulation process by the simulation apparatus 200 according to the present embodiment;
FIG. 10 is a flowchart (part 1) depicting an example of a detailed process procedure for the simulation process (step S903) for an element Cg in a magnetic body and depicted in FIG. 9;
FIG. 11 is a flowchart (part 2) depicting an example of a detailed process procedure of the simulation process (step S903) for an element Cg in the magnetic body and depicted in FIG. 9;
FIG. 12 is a flowchart depicting an example of a detailed process procedure of reversal processing (step S1004) depicted in FIG. 10; and
FIG. 13 is a graph depicting one example of a magnetization curve for grain-oriented electrical steel sheeting.

BEST MODE(S) FOR CARRYING OUT THE INVENTION

Embodiments of a magnetic body simulation program, simulation apparatus, and simulation method will be described in detail with reference to the accompanying drawings. In the description, vectors expressed in bold text in the drawings and equations are indicated using "[ ]". For example, vector X is [X]. Further, bar notations above vectors in the drawings and equations represent averages. In the description, vectors having such bar notations are indicated using "[ av]". For example, vector X having such a bar notation is [Xav].

(First embodiment)

<Simulation example>

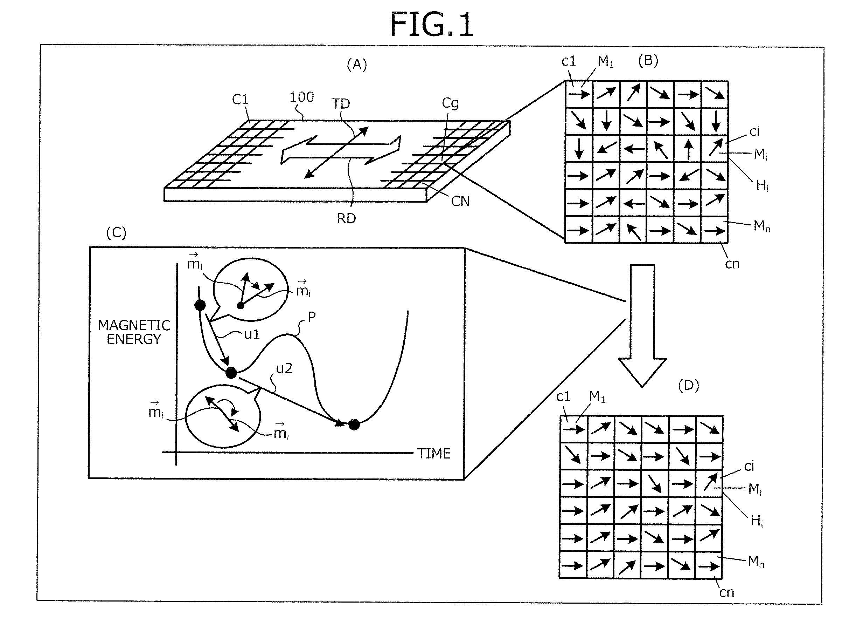

FIG. 1 is a diagram depicting one example of simulation according to a first embodiment. A magnetic body model 100 is digital data of a grain-oriented electrical steel sheet that is one example of a magnetic body and that has been modeled. The grain-oriented electrical steel sheet, for example, is a magnetic body for which the alternating current magnetic field is of a frequency f of 1.0MHz or greater.

(A) depicts the magnetic body model 100 of the grain-oriented electrical steel sheet. In (A), RD is the rolling direction at the time of processing and TD is a direction orthogonal to the rolling direction. Characteristics of the magnetic body of the grain-oriented electrical steel sheet differ for the rolling direction RD and the orthogonal direction TD. The permeability for the rolling direction RD is high as compared to the orthogonal direction TD and the hysteresis loss for the rolling direction RD small as compared to the orthogonal direction TD. In the present embodiment, simulation is executed such that differences in the characteristics for the rolling direction RD and the orthogonal direction TD can be reproduced. The magnetic body model 100 is respectively assigned to N elements C1 to CN (N≥2). (B) is an enlarged view of an element Cg of the magnetic body model 100. In (A), the magnetic body model 100 is expressed 3-dimensionally, but is expressed 2-dimensionally in (B) as a matter of convenience. The element Cg

($1 \leq g \leq N$) has n ($n \geq 2$) areas c1 to cn. The n ($n \geq 2$) areas c1 to cn, for example, represent the micromagnetics distribution of magnetization. In micromagnetics, the magnetic energy of a magnetic body is expressed by magnetic anisotropic energy $E_{ani}$, magnetostatic energy $E_{mag}$, exchange interaction energy $E_{exc}$, and the Zeeman energy $E_{ext}$ of equations (1) to (7).

$$E_{ani} = K\left[1-(\mathbf{k}_i \cdot \mathbf{m}_i)^2\right] \quad \text{(uniaxial anisotropy)} \tag{1}$$

$$E_{ani}(\vec{m}_i) = K_1\left(\alpha_{1,i}^2\alpha_{2,i}^2 + \alpha_{2,i}^2\alpha_{3,i}^2 + \alpha_{3,i}^2\alpha_{1,i}^2\right) \quad \text{( cubic anisotropy)} \tag{2}$$

$$E_{mag} = -\mathbf{M}_i \cdot \left[\sum_{j \neq i} D_{ij} \cdot \mathbf{M}_j + \frac{1}{2}D_{ij} \cdot \mathbf{M}_j\right] \quad i = 1, 2, ..., n \tag{3}$$

$$D_{ij} = \frac{1}{v_i}\int_{v_i}dr^3 \int_{s_j}dr'^2 \frac{(\mathbf{r}-\mathbf{r'})\hat{n}'}{|\mathbf{r}-\mathbf{r'}|^3} \tag{4}$$

$$E_{exc} = -\frac{2A^*}{\mathbf{M}^2 a^2}\mathbf{M}_i \cdot \sum_{n,n}\mathbf{M}_j , \quad i = 1, 2, ..., n \tag{5}$$

$$E_{ext} = -\mathbf{H}_{app} \cdot \mathbf{M}_i , \quad i = 1, 2, ..., N \tag{6}$$

$$E_\sigma(\vec{m}_i) = -\frac{3}{2}\lambda_{100}\sigma\left(\alpha_{1,i}^2\gamma_{1,i}^2 + \alpha_{2,i}^2\gamma_{2,i}^2 + \alpha_{3,i}^2\gamma_{3,i}^2 - \frac{1}{3}\right)$$
$$-3\lambda_{111}\sigma\left(\alpha_{1,i}\alpha_{2,i}\gamma_{1,i}\gamma_{2,i} + \alpha_{2,i}\alpha_{3,i}\gamma_{2,i}\gamma_{3,i} + \alpha_{3,i}\alpha_{1,i}\gamma_{3,i}\gamma_{1,i}\right) \tag{7}$$

Where, K: magnetic anisotropy coefficient, [k]: unit vector of direction of easy magnetization axis, [m]: unit vector of magnetization direction, [M]: magnetization of area ci, M: extent of magnetization [M], $D_{ij}$: demagnetization field determined from geometric configuration of area ci, [r]: position vector of area ci, [r']: position vector of area cj, A*: stiffness constant, a: area interval, [$H_{app}$]: externally applied magnetic field, n: area count. $\Sigma[M_j]$ is equation (5) is the sum of the magnetization of the areas adjacent to area [$M_i$].

$\lambda_{100}$ and $\lambda_{111}$ are magnetostriction constants. A magnetostriction constant has a value that differs according to the crystal axis. $\lambda_{100}$ is the magnetostriction constant of the (100) direction and $\lambda_{111}$ is the magnetostriction constant of the (111) direction. Further, $\alpha$ and $\gamma$ are given by equations (8), (9).

$$\alpha_{1,i}^2 = \left(\vec{m}_i \cdot \vec{a}_{1,i}\right)^2 \tag{8}$$

$$\gamma_{1,i}^2 = \left(\vec{\sigma} \cdot \vec{a}_{1,i}\right)^2 \tag{9}$$

Where, [$a_{1,i}$], [$a_{2,i}$], and [$a_{3,i}$] are the crystalline easy axes corresponding to an i-th magnetization and in the case of a cubic crystal, are vectors having axial directions a, b, and c indicating crystal orientation and having a length of 1. [$\sigma$] is a unit vector of the application direction of stress. The easy axis, in a grain-oriented electrical steel sheet and when the rolling direction RD is assumed to be the x axis, has the value [$a_{1,i}$]=(1,0,0). Assuming the orthogonal direction TD, which is orthogonal to the rolling direction RD of the electrical steel sheet, to be the y axis, the easy axis is [$a_{2,i}$]=(0,1/√2,1/√2). [$a_{3,i}$] is set in a direction orthogonal to [$a_{1,i}$] and [$a_{2,i}$].

In FIG. 1, arrows in the areas ci ($1 \leq i \leq n$) indicate magnetization $[M_i]$. The magnetization $[M_i]$ varies at each very small period $\Delta\tau$. By dividing the sum of the magnetization $[M_i]$ of the areas ci by the area count n, the average magnetization $[M_{av}]$ is obtained. The unit vector $[m_i]$ of the magnetization direction in an area ci is represented by $[m_i]=[M_i]/M_i$.

Overall magnetic energy $E_{tot}$ in the element Cg of the magnetic body is represented by the sum of the magnetic anisotropic energy $E_{ani}$, the magnetostatic energy $E_{mag}$, the exchange energy $E_{exc}$, the Zeeman energy $E_{ext}$, and the magnetoelastic energy $E\sigma([m_i])$ caused by stress, as indicated by equation (10).

$$E_{tot}(\vec{m}_i) = E_{ani}(\vec{m}_i) + E_{mag}(\vec{m}_i) + E_{exc}(\vec{m}_i) + E_{ext}(\vec{m}_i) + E_{\sigma}(\vec{m}_i) \quad (10)$$

These energies differ according to what is being calculated and are calculated as combinations of the above energies having one or more items. Here, when the magnetic state is calculated, two types of processes, magnetic rotation and magnetization reversal, are calculated. The first is a method according to the Landau-Lifshitz-Gilbert equation (hereinafter, "LLG equation"). Here, magnetic rotational motion according to the effective magnetic field is calculated.

(C) depicts a concept of magnetic rotational motion. With magnetic rotational motion, the respective magnetizations vary according to the LLG equation. In this case, the magnetization rotates in the direction of lower energy and therefore, as indicated by u1, continuously changes in the magnetization direction of lower energy. On the other hand, with magnetization reversal, as indicated by u2, domain wall pinning P, which is a magnetization energy barrier, is overcome and discontinuous variation toward a position of energy corresponding to 180 degrees or 90 degrees occurs. In the present embodiment, by reproducing (C) for each area ci by simulation, a state after magnetic rotation or magnetization reversal such as that depicted in (D) is obtained.

Thus, from a macroscopic view such as that of (A), although the direction of magnetization of the magnetic body is the rolling direction RD, from a microscopic view such as that of (D), the direction of the magnetization $[M_i]$ of an area ci in the element Cg is not uniform. This contrast occurs because simulation is executed taking the presence of impurities in the magnetic body into consideration. Since the simulation apparatus executes such simulation, in the magnetic body, orientation dependency in which the direction of magnetization is dependent on the direction of a specific crystal axis and reverses can be reproduced with high accuracy.

<Magnetic rotational motion>

Here, calculation of the magnetic rotational motion indicated by u1 of (C) will be described. The magnetic rotational motion is calculated from the effective magnetic field, which is calculated based on the energy. The effective magnetic field is calculated as indicated by equation (11).

$$\mathbf{H}_i = -\frac{\partial E_{tot}(\vec{m}_i)}{\partial M_i} \quad (11)$$

Equation (11) is the magnetic field by magnetic energy for the magnetization $[M_i]$ in an area ci. The effective magnetic field $[H_i]$ is used to obtain temporal variation of the magnetization $[M_i]$ of the next time. Normalization of equation (11) by the magnetic anisotropy $H_k=2K/M$ yields equation (12).

$$\mathbf{h}_i = \frac{\mathbf{H}_i}{H_k} = (\mathbf{k}_i \cdot \mathbf{m}_i)\mathbf{k}_i + h_m \sum_{j=1}^{N} D_{ij} \cdot \mathbf{m}_j + h_e \sum_{n,n} \mathbf{m}_j + h_a$$

$$+\frac{3\lambda_{100}\sigma}{H_k}\left(\vec{a}_{1,i}\alpha_{1,i}\gamma_{1,i}^2 + \vec{a}_{2,i}\alpha_{2,i}\gamma_{2,i}^2 + \vec{a}_{3,i}\alpha_{3,i}\gamma_{3,i}^2\right)$$

$$+3\lambda_{111}\sigma\left(\vec{a}_{1,i}\left(\alpha_{2,i}\gamma_{1,i}\gamma_{2,i} + \alpha_{3,i}\gamma_{3,i}\gamma_{1,i}\right) + \vec{a}_{2,i}\left(\alpha_{1,i}\gamma_{1,i}\gamma_{2,i} + \alpha_{3,i}\gamma_{2,i}\gamma_{3,i}\right)\right)$$

$$+3\lambda_{111}\sigma \cdot \vec{a}_{3,i}\left(\alpha_{2,i}\gamma_{2,i}\gamma_{3,i} + \alpha_{1,i}\gamma_{3,i}\gamma_{1,i}\right) \quad (12)$$

Where, $h_m$, he are respectively a static magnetic field coefficient and an exchange interaction coefficient normalized by the magnetic anisotropy $H_k$ as indicated by equations (13), (14). Further, $h_a$ is the externally applied magnetic field $H_{app}/H_k$ normalized by the magnetic anisotropy $H_k$.

$$h_m = \frac{M}{H_k} \tag{13}$$

$$h_e = \frac{A^*}{Ka^2} \tag{14}$$

The motion of the magnetization of the magnetic body is determined by the LLG equation indicated by equation (15).

$$\frac{d\mathbf{m}_i}{d\tau} = \mathbf{m}_i \times \mathbf{h}_i - \alpha\mathbf{m}_i \times (\mathbf{m}_i \times \mathbf{h}_i), \quad i = 1, 2, \ldots n \tag{15}$$

Where, $\alpha$ is a damping constant. The damping constant $\alpha$ is a magnetic-body-specific constant representing the speed of a process of damping. The first term on the right side of equation (15) is a precessional motion term and the second term is a damping term. In the case of ferrite, for example, $\alpha=0.1$ is used. $\tau$ is a time variable for executing the calculation of the LLG equation.

Here, a distribution calculation method of the LLG equation will be described using equation (16). In the calculation of equation (16), $\Delta\tau$ is a calculation time step length of the LLG equation. Here, the step length of each step is uniform.

$$\mathbf{m}_i^{new} = \mathbf{m}_i^{old} + \left\{ \mathbf{m}_i^{old} \times \mathbf{h}_i - \alpha\mathbf{m}_i^{old} \times (\mathbf{m}_i^{old} \times \mathbf{h}_i) \right\}\Delta\tau, \quad i = 1, 2, \ldots n \tag{16}$$

$[m_i]^{old}$ is the $[m_i]$ at the current time step $\tau$ and $[m_i]^{new}$ is the $[m_i]$ at the next time step $(\tau+\Delta\tau)$.

For each time step, equations (17), (18) are evaluated.

$$\left(\frac{\partial \overline{\mathbf{M}}}{\partial t}\right) = \frac{\overline{\mathbf{M}}^j - \overline{\mathbf{M}}^{j-1}}{\Delta t} \tag{17}$$

$$\left(\frac{\partial^2 \overline{\mathbf{M}}}{\partial t^2}\right) = \frac{\overline{\mathbf{M}}^j - 2\overline{\mathbf{M}}^{j-1} + \overline{\mathbf{M}}^{j-2}}{\Delta t^2} \tag{18}$$

Where, $[Mav]^j$ is the average magnetization in the element Cg at (time $t_j$) when all of the magnetization $[M_i]$ in the element Cg is converged. $[Mav]^{j-1}$ is the average magnetization immediately before $[Mav]^j$ when all of the magnetization $[M_i]$ in the element Cg is converged. Further, $[Mav]^{j-2}$ is the average magnetization immediately before $[Mav]^{j-1}$ when all of the magnetization $[M_i]$ in the element Cg is converged.

Convergence determination of the magnetization above, for example, is executed by equation (19).

$$\Delta m = \left(\mathbf{m}_i^{new} - \mathbf{m}_i^{old}\right)^2 < \varepsilon_m \tag{19}$$

The simulation apparatus determines convergence if for all of $[m_i]$, the magnetization has become less than a minute amount $\varepsilon_m$. Here, 1.e-6 is used for $\varepsilon_m$.

<Magnetization reversal motion>

Magnetization reversal motion will be described. The magnetization reversal process corresponds to rapidly changing the direction of the magnetization to the easy axis along which energy becomes low. This corresponds to the phenomenon of magnetic domains of low energy consequent to domain wall displacement increasing, rather than the magnetization in a very small area and consequent to domain wall displacement rotating as a whole. However, in general, domain wall displacement does not always move smoothly and the suppression of domain wall displacement called pinning and consequent to impurities occurs. Since domain wall pinning occurs, the magnetization cannot be further transitioned to a lower energy state. With magnetization reversal, discontinuous magnetization variations corresponding to 180 degrees and 90 degrees are possible, in which case, reversal is calculated from the magnitude relation of the energy. The 180-degree reversing process corresponding to 180-degree domain wall displacement is calculated by expression (20).

$$\vec{m}_i(r_i) \Rightarrow -\vec{m}_i \qquad if \quad \left(E_{tot}(\vec{m}_i) - E_{tot}(-\vec{m}_i)\right) \geq \Delta E_i^{180} \qquad (20)$$

Where, $\Delta E_i^{180}$ is a parameter corresponding to the height of the energy barrier that is consequent to pinning. The electrical steel sheet has anisotropy mainly consequent to a cubical crystal. In other words, in the direction of a axis, b axis, and c axis, which are crystal axes, the magnetic anisotropic energy becomes smaller. Therefore, not only 180-degree reversing, but also 90-degree reversing is present. The 90-degree reversing process is calculated by expression (21).

$$\vec{m}_i \Rightarrow \vec{a}_{ik} \qquad if \quad \left(E_{tot}(\vec{m}) - E_{tot}(\vec{a}_{ik})\right) \geq \Delta E_i^{90} \qquad (21)$$

In expression (21), [$a_j$] is an easy axis vector. Further, $E_{tot}$([$a_j$]) in expression (21) is calculated by substituting in equation (10), [$a_j$] into $E_{tot}$() instead of [$m_i$]. The unit vector [$m_i$] of the magnetization [$M_i$] has a property of easily becoming parallel to any one of the crystal axes, a axis, b axis, and c axis. Therefore, the unit vector [$m_i$] of the magnetization [$M_i$] before reversal is reversed to a crystal axis of low energy by 90-degree reversing. For example, if the direction of the unit vector [$m_i$] of the magnetization [$M_i$] before reversal is the direction of a axis, the direction of the unit vector [$m_i$] of the magnetization [$M_i$] after reversal is any one of the directions of b axis and c axis, these directions being of a lower magnetic energy than the direction of a axis. More specifically, the direction of the unit vector [$m_i$] of the magnetization [$M_i$] after reversal is the direction for which the energy is lower among the directions of b axis and c axis.
To reproduce this property, in the present embodiment, if the inequality of expression (21) is satisfied in the 90-degree reversing, the unit vector [$m_i$] of the magnetization [$M_i$] before reversal is updated to the easy axis vector [$a_j$] having a lower magnetic energy than the unit vector [$m_i$] of the magnetization [$M_i$] before reversal. The unit vector [$m_i$] of the magnetization [$M_i$] before reversal and the easy axis vector [$a_j$] are orthogonal and therefore, the 90-degree reversing can be reproduced by a simple calculation.
As depicted by u2 of (C) in FIG. 1, with magnetization reversal, both the 180-degree reversing of expression (20) and the 90-degree reversing of expression (21) may occur. In this case, since transition to a state in which the energy difference is greatest conceivable, the simulation apparatus reverses the magnetization to a state in which the energy becomes the least.

<Static magnetic field calculation>

Thereafter, if each of the magnetizations [$M_i$] satisfies the convergence determination of equation (19), for the element Cg, static magnetic field calculation using the average magnetization [Mav] is executed. In the static magnetic field calculation, the static magnetic field $Hs_g$ is obtained using equation (22). $\upsilon$ is the inverse of the permeability $\mu$.

$$\mathrm{rot}\left(\mathrm{vrotA}\right) = J_0 - \sigma \frac{\partial A}{\partial t} - \sigma \cdot \mathrm{grad}\phi \qquad (22)$$

The static magnetic field calculation in the finite element method is performed using equation (16), which is from a derivation of Maxwell's equation, a basic equation of electromagnetics. Where, A is the magnetic vector potential and $J_0$ is the current flowing in the magnetic body subject to calculation.
In the present embodiment, the magnetic body is of high resistivity and therefore, the current flowing in the

magnetic body becomes $J_0=0$. Further, if an external current is present, the effects of the external current have to be considered and therefore, $J_0$ is given the value of the external current. By providing positional coordinates of the element Cg to the magnetic vector potential A of equation (22), the magnetic vector potential A is obtained. The magnetic vector potential A is defined to be [B]=rot(A), when the magnetic flux density $[B]=\mu[H]+[M]$. Therefore, if the magnetic vector potential A is obtained, the magnetic flux density [B] is also obtained. If the magnetic flux density [B] is obtained, by providing the magnetization [M], the static magnetic field [H] is obtained.

In the present example, by providing [Mav] to M, the static magnetic field $[Hs_g]$ is obtained by the static magnetic field calculation. Each time the static magnetic field [Hsg] converges magnetization, a combination of the average magnetization [Mav] and static magnetic field $[Hs_g]$ at that time are saved. The average magnetization [Mav] and the static magnetic field [Hsg] can provide multiple combinations and therefore, a hysteresis curve HLg is created by plotting to a graph. The area Sg in the hysteresis curve HLg is the hysteresis loss for the element Cg.

Thus, even for the magnetic body of a high resistivity magnetic material, magnetization variations consequent to resonance phenomenon can be reproduced with high accuracy and therefore, hysteresis loss due to the resonance phenomenon of the magnetic body of a high resistivity magnetic material can be obtained with high accuracy.

<Example of computer hardware structure>

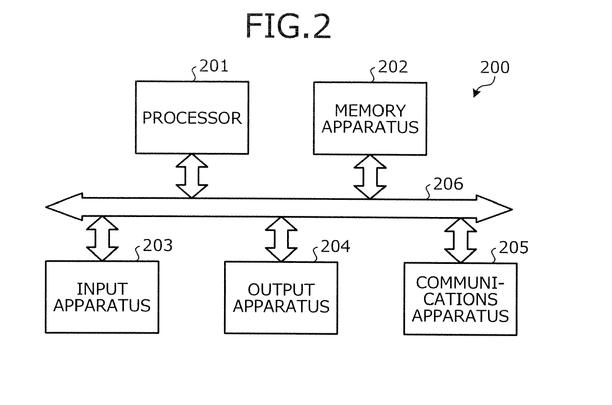

FIG. 2 is a block diagram depicting an example of a hardware structure of a simulation apparatus 200 that executes simulation. In FIG. 2, the simulation apparatus 200 is a computer that is configured by a processor 201, a memory apparatus 202, an input apparatus 203, an output apparatus 204, and a communications apparatus 205 connected by a bus 206.

The processor 201 governs overall control of the simulation apparatus 200. The processor 201 executes various programs (operating system (OS), the program of the present embodiment, etc.) stored in the memory apparatus 202 whereby, data in the memory apparatus 202 is read out, data resulting from the execution of programs is written to the memory apparatus 202, etc.

The memory apparatus 202 is configured by read-only memory (ROM), random access memory (RAM), flash memory, a magnetic disk drive, etc., is used as a work area of the processor 201, and stores various programs (the OS, the program of the present embodiment, etc.), various types of data (including data obtained by an execution of the various programs), etc.

The input apparatus 203 is an interface that performs the input of various types of data by user operation of a keyboard, a mouse, touch panel, etc. The output apparatus 204 is an interface that outputs data by an instruction of the processor 201. The output apparatus 204 may be a display, a printer, and the like. The communications apparatus 205 is an interface that receives data from external sources via a network, outputs data to external destinations, etc.

<System configuration example>

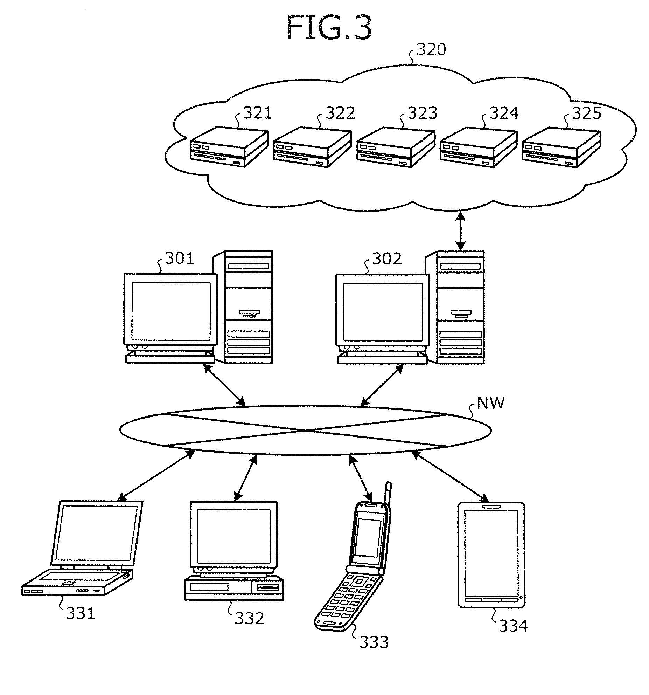

FIG. 3 is a diagram depicting an example of system configuration using the simulation apparatus 200 depicted in FIG. 2. In FIG. 3, a network NW is a network communicable with servers 301, 302 and clients 331 to 334 and for example, is configured by a local area network (LAN), a wide area network (WAN), the internet, a mobile telephone network, etc.

The server 302 is a management server of a server group (servers 321 to 325) configuring a cloud 320. Among the clients 331 to 334, the client 331 is a notebook personal computer, the client 332 is a desktop personal computer, the client 333 is a mobile telephone (may be a smartphone, personal handyphone system (PHS), etc.), and the client 334 is a tablet terminal. The servers 301, 302, 321 to 325, and the clients 331 to 334 of FIG. 3, for example, are realized by the simulation apparatus 200 depicted in FIG. 2. The clients 331 to 334 do not always have to be connected to the network NW.

<Example of stored contents of magnetic body database (DB)>

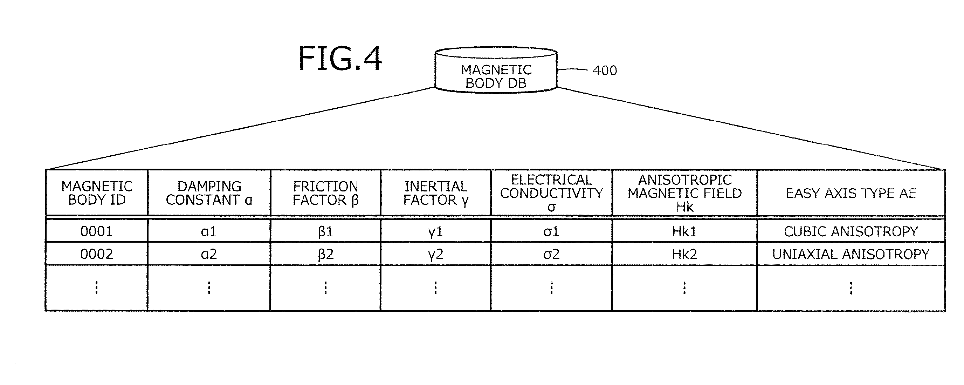

FIG. 4 is a diagram depicting one example of the contents stored in a magnetic body DB. In FIG. 4, a magnetic body DB 400 stores for each magnetic body, a magnetic body ID, a damping constant $\alpha$, a friction factor $\beta$, an inertial factor $\gamma$, the electrical conductivity $\sigma$, the anisotropic magnetic field Hk, and an easy axis type AE.

The electrical conductivity $\sigma$ and the anisotropic magnetic field Hk are used in the static magnetic field calculation for the element Cg. The easy axis type AE represents the easy axis of magnetization (hereinafter, simply "easy axis") applied to the magnetic body. An easy axis is a crystal orientation that is easily magnetized. For example, in the case of iron, six easy axes are present. The easy axis type includes two types, uniaxial anisotropy and cubic anisotropy. In the case of uniaxial anisotropy, there are two easy axes that are in opposite directions of each other. In the case of cubic anisotropy, there are six easy axes, including the three axes: a axis, b axis, and c axis, plus three axes of opposite directions thereof. The easy axis type AE of iron is cubic anisotropy and therefore, there are six easy axes of iron. When the magnetic body ID is specified by the computer, the values in the record of the specified magnetic body ID are read out from the magnetic body DB 400. More specifically, for example, a function of the magnetic body DB 400 is realized by the memory apparatus 202 depicted in FIG. 2.

<Example of functional configuration of simulation apparatus>

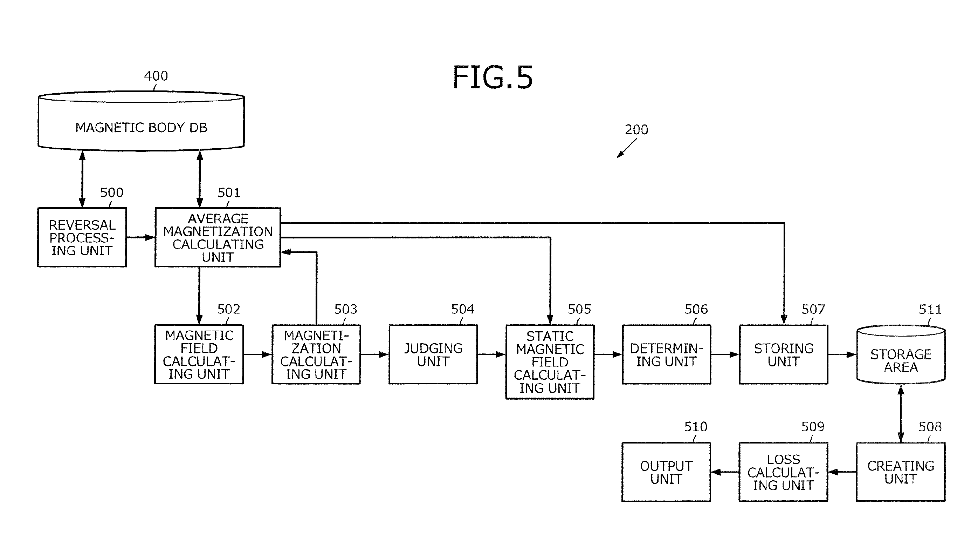

FIG. 5 is a block diagram depicting an example of a functional configuration of the simulation apparatus 200 according to the present embodiment. The simulation apparatus 200 has the magnetic body DB 400 and a storage area 511. Further, the simulation apparatus 200 has a reversal processing unit 500, an average magnetization calculating unit 501, a magnetic field calculating unit 502, a magnetization calculating unit 503, a judging unit 504, a static magnetic field calculating unit 505, a determining unit 506, a storing unit 507, a creating unit 508, a loss calculating unit 509, and an output unit 510. More specifically, for example, functions of the reversal processing unit 500 to the output unit 510 are realized by causing the processor 201 to execute the simulation program stored in the memory apparatus 202 depicted in FIG. 2. Further, a function of the storage area 511 is realized by the memory apparatus 202 depicted in FIG. 2.

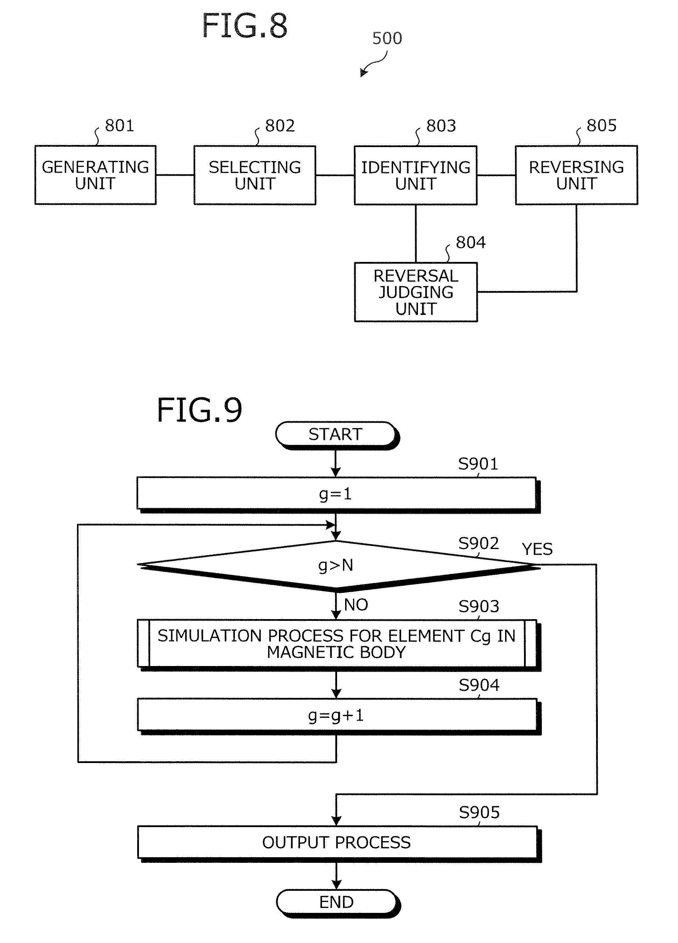

The reversal processing unit 500 executes reversal processing for the magnetization $[M_1]$ to $[M_n]$ of the areas c1 to cn in the element Cg. Details of the reversal processing unit 500 will be described with reference to FIG. 8.

The average magnetization calculating unit 501 calculates the average magnetization [Mav] of the magnetization $[M_1]$ to $[M_n]$ of the areas c1 to cn in the element Cg, each time the time $\tau$ changes by $\Delta\tau$. More specifically, for example, the average magnetization [Mav] is calculated by equation (23).

$$\overline{\mathbf{M}} = \frac{\sum \mathbf{M}_i}{n} \qquad (23)$$

When the magnetization of each area among a group of areas into which an element of an element group forming the magnetic body is divided is updated, the magnetic field calculating unit 502 calculates for each area, the effective magnetic field generated by the magnetic energy in the area. Here, "the magnetic field generated by the magnetic energy in the area" is the magnetic field generated by the magnetic energy in the area ci and corresponds to the right term of equation (11).

Further, the magnetic field calculating unit 502 may calculate the effective magnetic field by taking into consideration the rate of magnetization variation working in a direction that prevents variation of the average magnetization of the updated areas, and the inertia that brings into action, a magnetic field in a direction that keeps the rate of magnetization variation constant. In this case, equation (24) is used in place of equation (11).

$$\mathbf{H}_i = -\frac{\partial \mathrm{E}_{tot}(\mathbf{r})}{\partial \mathbf{M}_i} - \mathbf{m}\frac{\partial^2 \overline{\mathbf{M}}}{\partial t^2} - \beta\frac{\partial \overline{\mathbf{M}}}{\partial t} \qquad (24)$$

"The rate of magnetization variation working in a direction that prevents variation of the average magnetization of the updated areas" is the rate of magnetization variation working in a direction that prevents variation of the average magnetization [Mav] and corresponds to the friction term, which is the third term on the right side of equation (24). Further, "the inertia that brings into action, the magnetic field in a direction that keeps the rate of magnetization variation constant" is the inertia that brings into action, a magnetic field in a direction that keeps the rate of magnetization variation expressed by the friction term of equation (24) constant and corresponds to the inertia term, which is the second term on the right side of equation (24). In equation (24), the first term on the right side is the magnetic field generated by the magnetic energy in the area ci and corresponds to the right side of equation (11).

The magnetic field calculating unit 502 calculates the effective magnetic field $[H_i]$ of the area ci by equation (11) or equation (24), each time the time $\tau$ changes by $\Delta\tau$. The inertia term may be omitted from the right side of equation (24). The effective magnetic field $[H_i]$ is used in obtaining the magnetization $[M_i]$ of the next time.

Thus, by obtaining the effective magnetic field $[H_i]$ using the friction term, in the area ci, the amount of change $\Delta[M_i]$ from the magnetization $[M_i]$ of the time $(\tau-\Delta\tau)$ to the magnetization $[M_i]$ of the time $\tau$ can be obtained taking the friction of the magnetization $[M_i]$ of the time $(\tau-\Delta\tau)$ and the friction of the magnetization $[M_i]$ of the time $\tau$ into consideration. Therefore, the behavior that prevents variation of the magnetization $[M_i]$, which varies over time consequent to the resonance phenomenon, can be reproduced.

Further, if both the friction term and the inertia term are included, by obtaining the effective magnetic field $[H_i]$ using the friction term and the inertia term, in the area ci, the amount of change $\Delta[M_i]$ from the magnetization $[M_i]$ of the

time ($\tau$-$\Delta\tau$) to the magnetization [$M_i$] of the time $\tau$ can be obtained taking the friction and the inertia of the magnetization [$M_i$] of the time ($\tau$-$\Delta\tau$) and of the magnetization [$M_i$] of the time $\tau$ into consideration. Therefore, the behavior that prevents variation of the magnetization [$M_i$], which varies over time consequent to the resonance phenomenon, and the behavior that keeps the rate of magnetization variation constant can be reproduce.

The magnetization calculating unit 503 calculates the magnetization of each area, by obtaining the amount of magnetization variation for each area, based on the effective magnetic field calculated for each area and the magnetization of each area. At the magnetization calculating unit 503, the amount of magnetization variation is calculated before the magnetization calculation. The amount of magnetization variation is the amount of change of the unit vector [$m_i$] of the magnetization [$M_i$] when the time has changed from $\tau$ to $\tau$+$\Delta\tau$ and more specifically, is expressed by the second term on the right side of equation (16). When the unit vector of equation (16) is updated from [$m_i$]$^{old}$ to [$m_i$]$^{new}$, [$m_i$]$^{new}$ after the update is multiplied by the extent $M_i$ of the magnetization [$M_i$] whereby, the magnetization [$M_i$] after the updating is calculated. The calculated magnetization [Mi] is provided to the magnetic field calculating unit 502 and the effective magnetic field [$H_i$] of the next time is calculated.

The judging unit 504, based on the magnetization before variation and the magnetization after variation respectively calculated for each area by the magnetization calculating unit 503, makes a judgment about magnetization convergence at an element. More specifically, for example, the judging unit 504 uses the pre-updating [$m_i$]$^{old}$ and the post-updating [$m_i$]$^{new}$ in the element Cg to make the judgment by equation (19).

The static magnetic field calculating unit 505 uses equation (22) to calculate the static magnetic field Hs$_g$ of the element Cg. More specifically, for example, the static magnetic field calculating unit 505 calculates the static magnetic field Hs$_g$ of the element Cg, if at the same time $\tau$ at the judging unit 504 each of the magnetizations [$M_i$] satisfies the magnetization convergence condition of equation (19). For example, vacuum permeability is used as the permeability $\mu$ in the static magnetic field calculation.

The determining unit 506 determines whether the static magnetic field satisfies a magnetic field convergence condition. More specifically, for example, the determining unit 506 determines magnetic field convergence if the difference $\Delta$Hs of the current static magnetic field [Hs$_g$]$^{new}$ and the previous static magnetic field [Hs$_g$]$^{old}$ is within a threshold $\varepsilon$h.

The storing unit 507 stores to the storage area 511, a combination of the average magnetization [$M_i$] of the time tj when the magnetization convergence condition of equation (19) was satisfied and the static magnetic field Hs$_g$ that satisfied the magnetic field convergence condition by the determining unit 506. The stored combinations of the average magnetization [$M_i$] and the static magnetic field Hs$_g$ are the source of the hysteresis curve.

The creating unit 508 plots the stored combinations of the average magnetization [$M_i$] and the static magnetic field [Hsg] to a graph where the horizontal axis is the magnetic field and the vertical axis is the magnetic flux density and thereby, creates a hysteresis curve. At the creating unit 508, by providing the average magnetization [Mav] and static magnetic field [Hsg] to the magnetic flux density[B]=$\mu$[H]+[M], the magnetic flux density [B] for each time tj is obtained. As a result, the hysteresis curve can be created.

The loss calculating unit 509 calculates hysteresis loss by calculating the area in the hysteresis curve created by the creating unit 508. In the case of application of equation (24), hysteresis loss that takes into account the friction term and the inertia term of equation (24) can be obtained.

The output unit 510 outputs the hysteresis loss calculated by the loss calculating unit 509. The output unit 510 may display the hysteresis loss on a display or print out the hysteresis loss by a printer. Further, the output unit 510 may transmit the hysteresis loss to an external apparatus or store the hysteresis loss to the memory apparatus 202. The output unit 510 may further output the hysteresis curve created by the creating unit 508. Here, an example of a hysteresis curve will be described.

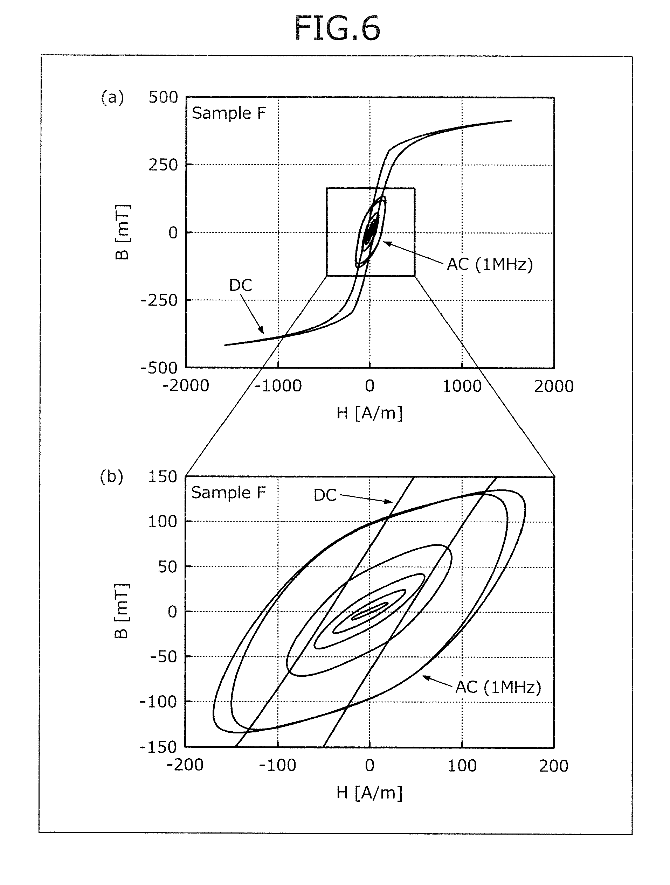

FIG. 6 is a graph of a hysteresis curve by direct current to ferrite and the actual measured data, at 1.0MHz, of the hysteresis curve. (b) is an enlarged graph of (a). The area inside the loop of the hysteresis curve is known to be the energy loss per one cycle, consumed in the magnetic body.

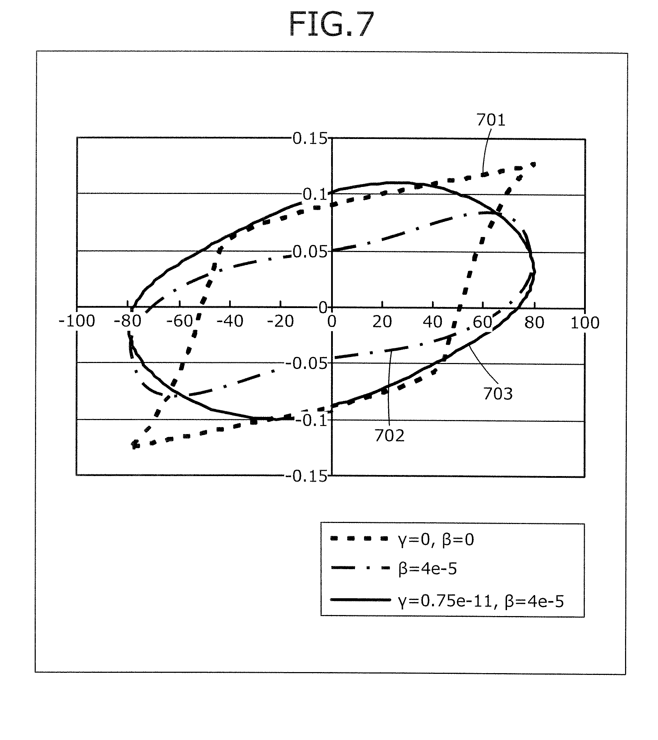

FIG. 7 is a graph depicting simulation results of the present embodiment. The hysteresis curve calculated using equation (11) is indicated by a dotted line 701. Further, the hysteresis curve calculated with only the inertia term as 0 is indicated by a dotted/dashed line 702. The hysteresis curve calculated by equation (24) to include the inertia term and the friction term is indicated by a solid line 703. The hysteresis curve of the solid line 703 is an ellipse; the hysteresis curve by actual measurement is reproduced. In the hysteresis curves of the dotted line 701 and the dotted/dashed line 702, reproduction by an ellipse is not achieved. In FIG. 7, frequency f=1.0MHz, $\gamma$=0.75$\times$10$^{-11}$, $\beta$=4.0$\times$10$^{-5}$ are assumed.

<Example of functional configuration of reversal processing unit 500>

FIG. 8 is a block diagram depicting an example of a functional configuration of the reversal processing unit 500 depicted in FIG. 5. The reversal processing unit 500 has a generating unit 801, a selecting unit 802, an identifying unit 803, a reversal judging unit 804, and a reversing unit 805.

The generating unit 801 generates easy axis vectors of areas into which an element of the element group is divided. More specifically, for example, the generating unit 801 refers to the magnetic body DB 400 and identifies an easy axis type of the magnetic body subject to analysis. The generating unit 801 generates an easy axis vector according to the easy axis type. For example, in a case where the easy axis type is cubic anisotropy, six unit vectors in the positive direction of a axis to axis c are generated as easy axis vectors. Further, in a case where the easy axis type is uniaxial anisotropy, for example, two unit vectors in the positive direction of a axis are generated as easy axis vectors. More specifically, the generating unit 801 generates the easy axis vectors such that the rolling direction RD is (100), and the orthogonal direction TD thereof is (011).

The selecting unit 802 calculates the magnetic energy of each magnetization of a divided area and selects from a group of calculated magnetic energies, a magnetic energy that is not the greatest. More specifically, for example, the selecting unit 802, for each magnetization of the divided area, calculates the magnetic energy $E_{tot}$ such as that indicated by equation (10). The selecting unit 802, in equation (10), provides as a parameter, an easy axis vector in place of the magnetization vector $[m_i]$. As result, for each magnetization of the divided area, the magnetic energy $E_{tot}$ is calculated.

The selecting unit 802 selects from among the magnetic energies $E_{tot}$ calculated for each magnetization of the divided area, a magnetic energy that is not the greatest or selects the lowest magnetic energy. In the magnetization reversal process, the direction of magnetization rapidly changes to an easy axis for which the energy becomes low. Therefore, the selecting unit 802, by selecting a magnetic energy that is not the greatest from among the magnetic energies $E_{tot}$, can reproduce variations of the easy axis vector that is the calculation basis of the selected magnetic energy $E_{tot}$. As result, the phenomenon of magnetic domains of low energy consequent to domain wall displacement increasing, rather than the magnetization in a very small area and consequent to domain wall displacement rotating as a whole can be reproduced.

The identifying unit 803 identifies based on the magnetization of the area and the identified easy axis vector in the case of selected magnetic energy, a reversal angle of the magnetization reversal according to the height of the energy barrier that is consequent to pinning in the area. More specifically, for example, the identifying unit 803 judges whether expression (25) is satisfied. The identified easy axis vector is the easy axis vector used in the calculation of the magnetic energy selected by the selecting unit 802. Here, $[a_{i\,kmin}]$ is assumed.

$$\vec{m}_i \cdot \vec{a}_{i\,k\min} \leq -\frac{1}{\sqrt{2}} \qquad (25)$$

Expression (25) is the inner product of the magnetization vector $[m_i]$ and the identified easy axis vector $[a_i\ kmin]$. In other words, if the angle formed by the magnetization vector $[m_i]$ and the identified easy axis vector $[a_{i\,kmin}]$ is between 135 degrees and 225 degrees, the identifying unit 803 assumes the reversal angle of the magnetization vector $[m_i]$ to be 180 degrees. In other cases, the identifying unit 803 assumes the reversal angle of the magnetization vector $[m_i]$ to be 90 degrees. Here, although the range of the angle formed by the magnetization vector $[m_i]$ and the identified easy axis vector $[a_{i\,kmin}]$ is regarded to be 135 degrees to 225 degrees, the range can be arbitrarily set from 90 degrees to 270 degrees.

The reversing unit 805 reverses the magnetization by the identified reversal angle. More specifically, for example, if the reversal angle is 180 degrees, the reversing unit 805 updates the unit vector $[m_i]$ of the magnetization $[M_i]$ to - $[m_i]$. As a result, the unit vector $[m_i]$ of the magnetization $[M_i]$ becomes in a state of being reversed by 180 degrees. Further, if the reversal angle is 90 degrees, the reversing unit 805 updates the unit vector $[m_i]$ of the magnetization $[M_i]$ to the identified easy axis vector $[a_{i\,kmin}]$. As a result, the unit vector $[m_i]$ of the magnetization $[M_i]$ becomes in a state of being reversed by 90 degrees.

Further, the identifying unit 803 identifies based on the magnetization and the identified easy axis, a parameter $\Delta E$ that corresponds to the height of the energy barrier that is consequent to pinning. As described, in the magnetization reversal process, the magnetic domains of low energy consequent to domain wall displacement increase rather than the magnetization in a very small area and consequent to domain wall displacement rotating as a whole and therefore, the direction of magnetization rapidly changes to the easy axis for which the energy is low. However, in general, domain wall displacement does not always move smoothly and as depicted by (C) of FIG. 1, pinning occurs consequent to impurities, etc.

Therefore, concerning the discontinuous magnetization variation corresponding to 180-degree or 90-degree magnetization reversal, at the identifying unit 803, a parameter for calculating reversal from a magnitude relation of the magnetic energy is identified. More specifically, in the case of 180-degree reversal, the identifying unit 803 sets the parameter $\Delta E$ that corresponds to the height of the energy barrier caused by pinning to be $\Delta E_i^{180}$. In the case of 90-degree reversal, the identifying unit 803 sets the parameter $\Delta E$ that corresponds to the height of the energy barrier caused by pinning to be $\Delta E_i^{90}$. Although the parameter that corresponds to the height of the energy barrier may be a value fixed for each reversal angle, here, Lorentz distribution is assumed and therefore, a value that differs according

to the magnetization $[M_i]$ by a random number is used. For example, $\Delta E_i^{180}$ is $10 \pm 15$ [J/m$^3$]; $\Delta E_i^{90}$ is $40 \pm 20$ [J/m$^3$].

The reversal judging unit 804, based on the magnetic energy in the area related to the magnetization and the parameter that corresponds to the height of the energy barrier that is consequent to pinning, judges whether the magnetization is to be reversed by the reversal angle. More specifically, for example, in the case of 180-degree reversal, the reversal judging unit 804 judges whether the 180-degree reversal condition represented by expression (20) is satisfied. If the 180-degree reversal condition is satisfied, the reversing unit 805 updates the unit vector $[m_i]$ of the magnetization $[M_i]$ to $- [m_i]$ whereby, the unit vector $[m_i]$ of the magnetization $[M_i]$ is in a state of being reversed by 180 degrees.

Similarly, in the case of 90-degree reversal, the reversal judging unit 804 judges whether the 90-degree reversal condition represented by the expression (21) is satisfied. If the 90-degree reversal condition is satisfied, the reversing unit 805 updates the unit vector $[m_i]$ of the magnetization $[M_i]$ to the identified easy axis vector $[a_{i\ kmin}]$. If the 90-degree reversal condition of expression (21) is satisfied, the angle formed by the unit vector $[m_i]$ of the magnetization $[M_i]$ and the identified easy axis vector $[a_{i\ kmin}]$ is 90 degrees and therefore, the unit vector $[m_i]$ of the magnetization $[M_i]$ becomes in a state of being reversed by 90 degrees. With either judgment, if the reversal condition is not satisfied, the reversing unit 805 does not update the unit vector $[m_i]$ of the magnetization $[M_i]$.

<Example of procedure of simulation process>

FIG. 9 is a flowchart depicting an example of a procedure of a simulation process by the simulation apparatus 200 according to the present embodiment. The simulation apparatus 200 sets a variable g, which identifies an element, to be g=1 (step S901), and judges whether g>N is true (step S902). N is the total number of elements. If g>N is not true (step S902: NO), the simulation apparatus 200 executes the simulation process for the element Cg in the magnetic body (step S903).

The simulation apparatus 200 increments g (step S904), and returns to step S902. At step S902, if g>N is true (step S902: YES), there is no element Cg to be simulated and the simulation apparatus 200 executes an output process by the output unit 510 (step S905), and ends a series of the simulation process. In FIG. 9, although the simulation process (step S903) is executed sequentially for each element Cg, the simulation process may be executed in parallel.

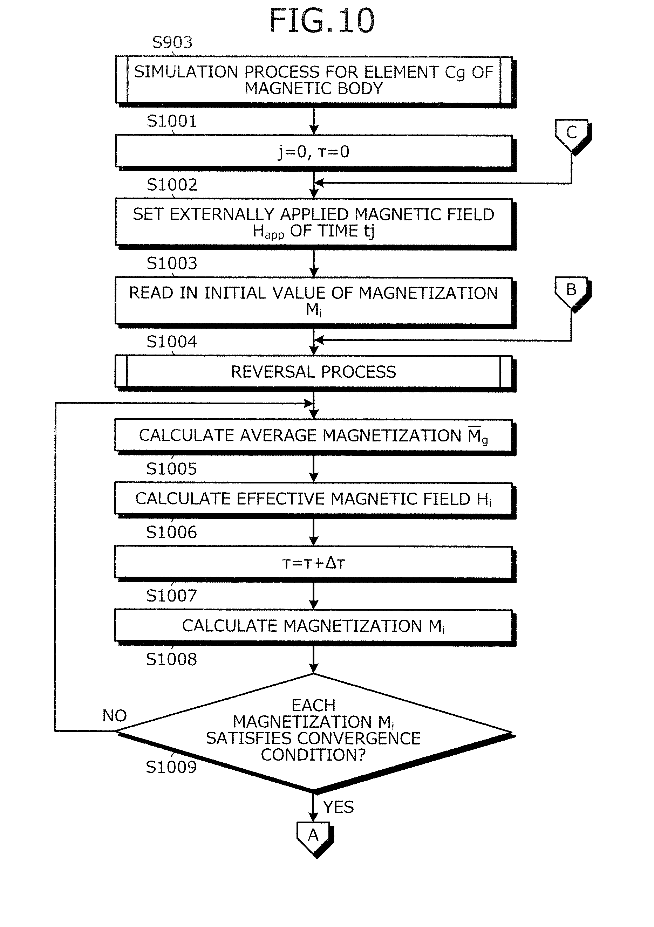

FIG. 10 is a flowchart (part 1) depicting an example of a detailed process procedure for the simulation process (step S903) for an element Cg in the magnetic body and depicted in FIG. 9. The simulation apparatus 200 sets a time variable j and an update time $\tau$ to be j=0, $\tau$=0, respectively (step S1001). The simulation apparatus 200 sets the externally applied magnetic field $[H_{app}]$ of the time tj (step S1002). The externally applied magnetic field $[H_{app}]$ is a magnetic field determined by the frequency f and the time tj. The frequency f is assumed to be provided in advance. The externally applied magnetic field $[H_{app}]$ is used in equation (6).

The simulation apparatus 200 reads in the initial value of the magnetization $[M_i]$ from the memory apparatus 202 (step S1003). The initial value of the magnetization $[M_i]$ is, for example, assumed to be pre-stored in the memory apparatus 202 and read in from the memory apparatus 202 at the start of simulation.

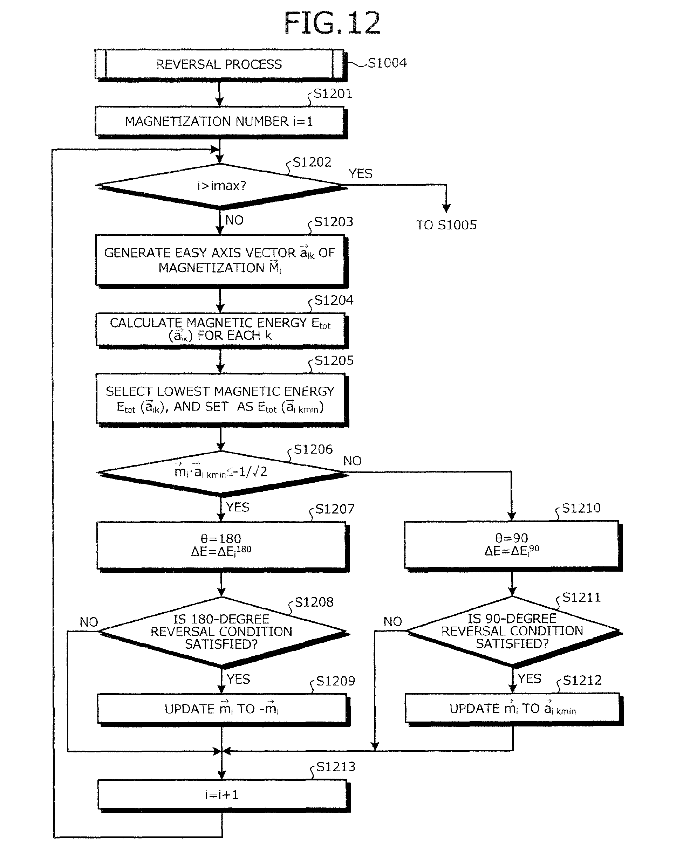

The simulation apparatus 200 executes reversal processing of the magnetization $[M_i]$ via the reversal processing unit 500 (step S1004). Details of the reversal processing (step S1004) will be described with reference to FIG. 12.

The simulation apparatus 200 calculates the average magnetization $[Mgav]$ for the time $\tau$ via the average magnetization calculating unit 501 (step S1005). The simulation apparatus 200 calculates the effective magnetic field $[H_i]$ for the time $\tau$ via the magnetic field calculating unit 502 (step S1006).

The simulation apparatus 200 advances the time $\tau$ by a given time length $\Delta\tau$ (step S1007), uses the LLG equation of equation (15), and calculates the amount of change of the unit vector $[m_i]$ of the magnetization $[M_i]$ and thereby calculates the magnetization $[M_i]$ using equation (16), via the magnetization calculating unit 503 (step S1008). The simulation apparatus 200 uses the magnetization $[M_i]$ before and after variation to judge, via the judging unit 504 and for each area ci, whether the magnetization convergence condition is satisfied (step S1009).

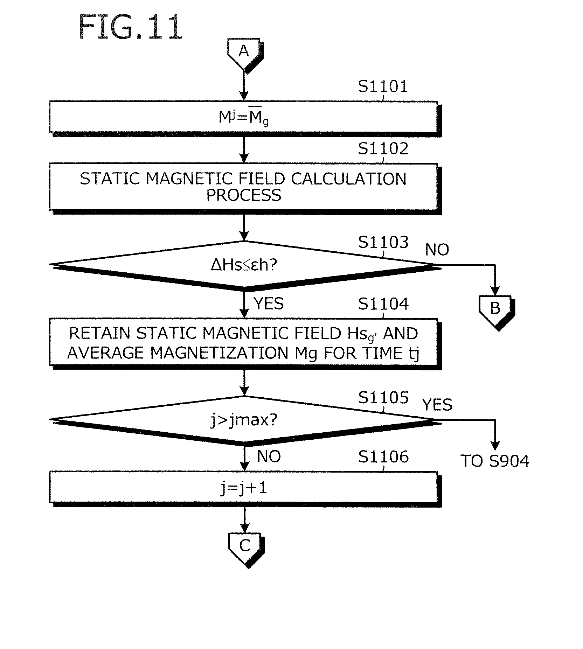

If even any one area ci does not satisfy the magnetization convergence condition (step S1009: NO), the simulation apparatus 200 returns to step S1005, and calculates the average magnetization $[Mav]$ by the updated magnetization $[M_i]$ at step S1008. On the other hand, if each of area ci satisfies the magnetization convergence condition (step S1009: YES), the simulation apparatus 200 transitions to step S1101 in FIG. 11.

FIG. 11 is a flowchart (part 2) depicting an example of a detailed process procedure of the simulation process (step S903) for an element Cg in the magnetic body and depicted in FIG. 9. After step S1009: YES in FIG. 10, the simulation apparatus 200 sets $[M]^j$ to the latest average magnetization $[Mav]$ obtained at step S1005 (step S1101). $[M]^j$ is a value used by the friction term of equation (17) and the inertial term of equation (18). At a subsequent step S1106, j is incremented and therefore, in the calculation of the effective magnetic field (step S1006) thereafter, $[M_g]^{j-1}$ is used.

The simulation apparatus 200 uses equation (22) and executes a static magnetic field calculation process via the static magnetic field calculating unit 505 (step S1102). The simulation apparatus 200 determines, via the determining unit 506, whether the static magnetic field $[Hs_g]$ satisfies the magnetic field convergence condition (step S1103). If not (step S1103: NO), the simulation apparatus 200 returns to step S1004 in FIG. 10. The combination of the static magnetic field [Hs$_g$] and the average magnetization [Mav] in this case are not stored to the storage area 511 and are not reflected in the hysteresis curve.

On the other hand, if the magnetic field convergence condition is satisfied (step S1103: YES), the simulation apparatus 200 retains in the storage area 511, the static magnetic field [Hs$_g$]$^j$ and the average magnetization [Mav]$^j$ for the time tj (step S1104) and judges whether j>jmax is true (step S1105). jmax is the maximum value of the variable j and tjmax is the simulation time. If j>jmax is not true (step S1105: NO), the simulation apparatus 200 increments j (step S1106), returns to step S1002 in FIG. 10, and resets the externally applied magnetic field [H$_{app}$] for the incremented time tj.

Further, consequent to the incrementing of j, the latest average magnetization [Mav]$^j$ at step S1001 is the average magnetization [Mav], and the average magnetization [Mav]$^{j-1}$ is the average magnetization [Mav]$^{j-2}$. As a result, the calculation of the friction term (equation (17)) and the inertia term (equation (18)) can be performed. On the other hand, if j>jmax is true (step S1105: YES), the simulation process for the element Cg ends and therefore, the simulation apparatus 200 transitions to step S904 in FIG. 9.

FIG. 12 is a flowchart depicting an example of a detailed process procedure of the reversal processing (step S1004) depicted in FIG. 10. The simulation apparatus 200 sets a magnetization number i=1 (step S1201), and determines whether i>imax is true (step S1202). imax is the maximum value of the magnetization number i. If i>imax is not true (step S1202: NO), the simulation apparatus 200 generates, via the generating unit 801, the easy axis vector [a$_{ik}$] of the magnetization [M$_i$] (step S1203). k is the number of the easy axis vector and in the case of uniaxial anisotropy, k=1, 2; and in the case of cubic anisotropy, k=1, 2, 3, 4, 5, 6.

The simulation apparatus 200 calculates, via the selecting unit 802 and for each k, the magnetic energy E$_{tot}$([a$_{ik}$]) (step S1204). The simulation apparatus 200, via the selecting unit 802, selects the lowest magnetic energy E$_{tot}$([a$_{ik}$]), and sets the selected magnetic energy E$_{tot}$([a$_{ik}$]) as E$_{tot}$([a$_{i\ kmin}$]) (step S1205). The easy axis vector [a$_{i\ kmin}$] is the identified easy axis vector.

The simulation apparatus 200 judges, via the identifying unit 803, whether expression (25) is satisfied (step S1206). If so (step S1206: YES), the simulation apparatus 200, via the identifying unit 803, sets the reversal angle θ to θ=180, and sets the parameter ΔE that corresponds to the height of the energy barrier that is consequent to pinning to be ΔE$_i$$^{180}$ (step S1207). The simulation apparatus 200 judges, via the reversal judging unit 804, whether the 180-degree reversal condition represented by expression (20) is satisfied (step S1208). If the 180-degree reversal condition represented by expression (20) is satisfied (step S1208: YES), the simulation apparatus 200 updates, via the reversing unit 805, the unit vector [m$_i$] of the magnetization [M$_i$] to - [m$_i$] (step S1209), and transitions to step S1213. On the other hand, if the 180-degree reversal condition represented by expression (20) is not satisfied (step S1208: NO), the simulation apparatus 200 transitions to step S1213 without updating the unit vector [m$_i$] of the magnetization [M$_i$].

At step S1206, if expression (25) is not satisfied (step S1206: NO), the simulation apparatus 200, via the identifying unit 803, sets the reversal angle θ to θ=90, and sets the parameter ΔE that corresponds to the height of the energy barrier that is consequent to pinning to be ΔE$_i$$^{90}$ (step S1210). The simulation apparatus 200 judges, via the reversal judging unit 804, whether the 90-degree reversal condition represented by expression (21) is satisfied (step S1211). If the 90-degree reversal condition represented by expression (21) is satisfied (step S1211: YES), the simulation apparatus 200, via the reversing unit 805, updates the unit vector [m$_i$] of the magnetization [Mi] to the identified easy axis vector [a$_{i\ kmin}$] (step S1212), and transitions to step S1213. On the other hand, if the 90-degree reversal condition represented by expression (21) is not satisfied (step S1211: NO), the simulation apparatus 200 transitions to step S1213 without updating the unit vector [m$_i$] of the magnetization [M$_i$].

At step S1213, the simulation apparatus 200 increments i (step S1213), and returns to step S1202. At step S1202, if i>imax is true (step S1202: YES), the simulation apparatus 200 ends the reversal processing (step S1004), and transitions to step S1005.

Thus, according to the present embodiment, the orientation dependency of magnetic characteristics seen with grain-oriented electrical steel sheeting and non-oriented electrical steel sheeting can be reproduce. Further, in the present embodiment, not only can the magnetic characteristics for the rolling direction RD of grain-oriented electrical steel sheeting be reproduced, but the magnetic characteristics for the orthogonal direction TD can also be reproduced. As indicated by expression (20) and expression (21), since the orientation dependency can be reproduced by a simple computation, increases in the calculation volume with the reproduction of the orientation dependency can be suppressed. Further, since magnetization convergence is judged and the static magnetic field is calculated from a state after the reversal processing, the hysteresis loss that occurs in the electrical steel sheeting of motors, transformers, etc. can be calculated.

According to the present embodiment, since the effective magnetic field [H$_i$] is obtained taking friction into consideration, a behavior that prevents variation in the magnetization [M$_i$] that varies over time consequent to the resonance phenomenon can be reproduced. Therefore, a hysteresis curve reflecting the effects of such behavior is obtained, and hysteresis loss can be obtained with high accuracy with respect to magnetic bodies of high resistivity magnetic material with a high frequency.

If the friction term and the inertia are included, the effective magnetic field [H$_i$] can be obtained taking into consideration friction and inertia; and therefore, a behavior that prevents variation of the magnetization $[M_i]$, which varies over time consequent to the resonance phenomenon, and a behavior that keeps the rate of magnetization variation constant can be reproduced. Therefore, a hysteresis curve reflecting the effects of such behaviors is obtained, and hysteresis loss can be obtained with high accuracy with respect to magnetic bodies of high resistivity magnetic material with a high frequency.

According to the present embodiment, in the simulation apparatus 200, although the creating unit 508 creates the hysteresis curve and the loss calculating unit 509 calculates the hysteresis loss, the creating unit 508 and the loss calculating unit 509 may be executed by another apparatus other than the simulation apparatus 200. For example, configuration may be such that in the simulation apparatus 200, the storing unit 507 stores to the storage area 511, the combination of the static magnetic field $[Hs_g]^j$ and the average magnetization $[Mav]^j$ for the time tj, and transmits the combination to another apparatus having the creating unit 508 and the loss calculating unit 509.

EXPLANATIONS OF LETTERS OR NUMERALS

| | |
|---|---|
| 200 | simulation apparatus |
| 202 | memory apparatus |
| 500 | reversal processing unit |
| 501 | the average magnetization calculating unit |
| 502 | magnetic field calculating unit |
| 503 | magnetization calculating unit |
| 504 | judging unit |
| 505 | static magnetic field calculating unit |
| 506 | determining unit |
| 507 | storing unit |
| 508 | creating unit |
| 509 | loss calculating unit |
| 510 | output unit |
| 801 | generating unit |
| 802 | selecting unit |
| 803 | identifying unit |
| 804 | reversal judging unit |
| 805 | reversing unit |

**Claims**

1. A magnetic body simulation program causing a computer to:

   generate an easy axis vector in an area divided from an element of a group of elements forming a magnetic body;
   calculate magnetic energy of each magnetization of the divided area, select from among the calculated magnetic energies, a magnetic energy that is not the greatest;
   identify based on the magnetization of an area and a specific easy axis vector in a case of the selected magnetic energy, a reversal angle of magnetization reversal according to a height of an energy barrier that is consequent to pinning in the area; and
   reverse the magnetization by the identified reversal angle.

2. The magnetic body simulation program according to claim 1, wherein
   in selecting the magnetic energy, the computer caused to select the magnetic energy that is lowest among the magnetic energies.

3. The magnetic body simulation program according to claim 1 or 2, wherein
   the computer is caused to:

   identify based on the magnetization and the specific easy axis vector, a parameter that corresponds to the height of the energy barrier that is consequent to pinning; and
   judge based on the magnetic energy in the area and related to the magnetization, and the identified parameter, whether to reverse the magnetization by the reversal angle; and

in reversing the magnetization, the computer is caused to reverse the magnetization by the reversal angle, upon judging that the magnetization is to be reversed.

4. The magnetic body simulation program according to claim 3, wherein
in judging whether the magnetization is to be reversed and when the reversal angle is 180 degrees, the computer is caused to judge whether a difference of the magnetic energy in the area and related to the magnetization minus the magnetic energy of the area and related to magnetization whose direction has been reversed by 180 degrees with respect to the magnetization is at least the parameter, and
in reversing the magnetization and upon judging that the magnetization is to be reversed, the computer is caused to update the magnetization to the magnetization whose direction has been reversed by 180 degrees with respect to the magnetization.

5. The magnetic body simulation program according to claim 3, wherein
in judging whether the magnetization is to be reversed and when the reversal angle is 90 degrees, the computer is caused to judge whether a difference of the magnetic energy in the area and related to the magnetization minus the magnetic energy in the area and related to the specific easy axis vector is at least the parameter, and
in reversing the magnetization and upon judging that the magnetization is to be reversed, the computer is caused to update the magnetization to the specific easy axis vector.

6. The magnetic body simulation program according to any one of claims 1 to 5, wherein
the computer is caused to:

calculate for each area and after reversing the magnetization, an effective magnetic field based on a magnetic field generated from the magnetic energy of each area divided from an element of the group of elements forming the magnetic body, and a rate of magnetization variation working in a direction that prevents variation of an average magnetization of the magnetization of each area;
obtain based on the effective magnetic field calculated for each area, and the magnetization of each area, an amount of magnetization variation for each area, and calculate for each area, the magnetization after variation;
judge based on based on the magnetization before and after variation for each area, whether the magnetization in the element converges; and
store to a memory apparatus, a combination of the average magnetization of each area in a case where the magnetization in the element is judged to converge, and the static magnetic field based on the average magnetization.

7. The magnetic body simulation program according to claim 6, wherein
in calculating the effective magnetic field, the computer is caused to calculate for each area and when the magnetization of each area varies, an effective field based on a magnetic field generated by the magnetic energy in the area, the rate of magnetization variation and inertia that brings into action, the magnetic field in a direction that keeps the rate of magnetization variation constant.

8. The magnetic body simulation program according to claim 6 or 7, wherein
the computer is caused to calculate hysteresis loss from an area of a hysteresis curve obtained from a group of combinations of the average magnetization and the static magnetic field stored in the memory apparatus.

9. A magnetic body simulation apparatus comprising:

a generating unit that generates an easy axis vector in an area divided from an element of a group elements forming a magnetic body;
a selecting unit that calculates magnetic energy for each magnetization of the divided area, and selects from the calculated magnetic energies, a magnetic energy that is not the greatest;
an identifying unit that based on the magnetization of an area and a specific easy axis vector in a case of the selected magnetic energy, identifies a reversal angle of magnetization reversal according to a height of an energy barrier that is consequent to pinning in the area; and
a reversing unit that reverses the magnetization by the reversal angle identified by the identifying unit.

10. A magnetic body simulation method comprising:

a computer generating an easy axis vector in an area divided from an element of a group of elements forming a magnetic body;

the computer calculating magnetic energy of each magnetization of the divided area, select from among the calculated magnetic energies, a magnetic energy that is not the greatest;

the computer identifying based on the magnetization of an area and a specific easy axis vector in a case of the selected magnetic energy, a reversal angle of magnetization reversal according to a height of an energy barrier that is consequent to pinning in the area; and

the computer reversing the magnetization by the identified reversal angle.

FIG.1

# FIG.2

# FIG.3

FIG.4

| MAGNETIC BODY ID | DAMPING CONSTANT α | FRICTION FACTOR β | INERTIAL FACTOR γ | ELECTRICAL CONDUCTIVITY σ | ANISOTROPIC MAGNETIC FIELD Hk | EASY AXIS TYPE AE |
|---|---|---|---|---|---|---|
| 0001 | α1 | β1 | γ1 | σ1 | Hk1 | CUBIC ANISOTROPY |
| 0002 | α2 | β2 | γ2 | σ2 | Hk2 | UNIAXIAL ANISOTROPY |
| ... | ... | ... | ... | ... | ... | ... |

MAGNETIC BODY DB

400

# FIG.5

EP 2 891 996 A1

# FIG.6

# FIG.7

# FIG.8

500

| 801 | 802 | 803 | 805 |
|---|---|---|---|
| GENERATING UNIT | SELECTING UNIT | IDENTIFYING UNIT | REVERSING UNIT |

804
REVERSAL JUDGING UNIT

# FIG.9

START

S901
$g=1$

S902
$g>N$ — YES

NO

S903
SIMULATION PROCESS FOR ELEMENT Cg IN MAGNETIC BODY

S904
$g=g+1$

S905
OUTPUT PROCESS

END

# FIG.10

S903

SIMULATION PROCESS FOR ELEMENT Cg OF MAGNETIC BODY

S1001

$j=0, \tau=0$

C

S1002

SET EXTERNALLY APPLIED MAGNETIC FIELD $H_{app}$ OF TIME tj

S1003

READ IN INITIAL VALUE OF MAGNETIZATION $M_i$

B

S1004

REVERSAL PROCESS

CALCULATE AVERAGE MAGNETIZATION $\overline{M}_g$

S1005

CALCULATE EFFECTIVE MAGNETIC FIELD $H_i$

S1006

$\tau=\tau+\Delta\tau$

S1007

CALCULATE MAGNETIZATION $M_i$

S1008

EACH MAGNETIZATION $M_i$ SATISFIES CONVERGENCE CONDITION?

NO

S1009

YES

A

# FIG.11

A

S1101
$$M^j = \overline{M}_g$$

S1102
STATIC MAGNETIC FIELD CALCULATION PROCESS

S1103
$\Delta Hs \leq \varepsilon h?$ —— NO —→ B

YES

S1104
RETAIN STATIC MAGNETIC FIELD $Hs_{g'}$ AND AVERAGE MAGNETIZATION Mg FOR TIME tj

S1105
$j > jmax?$ —— YES —→ TO S904

NO

S1106
$j = j+1$

C

# FIG.12

```
┌──────────────────────────────┐
│      REVERSAL PROCESS         │──── S1004
└──────────────────────────────┘
                │
                ▼
                              ⌐S1201
┌──────────────────────────────┐
│   MAGNETIZATION NUMBER i=1    │
└──────────────────────────────┘
                │
                ▼
                   ⌐S1202            YES
         ◇ i>imax? ◇ ──────────────────────►  TO S1005
                │
                │ NO
                ▼
                              ⌐S1203
┌──────────────────────────────┐
│ GENERATE EASY AXIS VECTOR a⃗ik OF │
│    MAGNETIZATION M⃗i           │
└──────────────────────────────┘
                │
                ▼
                              ⌐S1204
┌──────────────────────────────┐
│ CALCULATE MAGNETIC ENERGY Etot│
│      (a⃗ik) FOR EACH k         │
└──────────────────────────────┘
                │
                ▼
                              ⌐S1205
┌──────────────────────────────┐
│ SELECT LOWEST MAGNETIC ENERGY │
│ Etot (a⃗ik), AND SET AS Etot (a⃗i kmin) │
└──────────────────────────────┘
                │
                ▼
                   ⌐S1206              NO
         ◇ m⃗i·a⃗i kmin≤-1/√2 ◇ ──────────────┐
                │                            │
                │ YES      ⌐S1207            │  ⌐S1210
                ▼                            ▼
┌──────────────────────┐      ┌──────────────────────┐
│      θ=180           │      │       θ=90           │
│    ΔE=ΔEi180         │      │     ΔE=ΔEi90         │
└──────────────────────┘      └──────────────────────┘
                │                            │
                ▼  ⌐S1208                    ▼  ⌐S1211
  NO    ◇ IS 180-DEGREE ◇       NO   ◇ IS 90-DEGREE ◇
◄───────◇ REVERSAL CONDITION      ◄───◇ REVERSAL CONDITION
        ◇  SATISFIED? ◇                ◇  SATISFIED? ◇
                │                            │
                │ YES  ⌐S1209                │ YES  ⌐S1212
                ▼                            ▼
┌──────────────────────┐      ┌──────────────────────┐
│  UPDATE m⃗i TO -m⃗i    │      │ UPDATE m⃗i TO a⃗i kmin │
└──────────────────────┘      └──────────────────────┘
                │                            │
                ▼◄───────────────────────────┘
                │
                ▼
                              ⌐S1213
┌──────────────────────────────┐
│           i=i+1              │
└──────────────────────────────┘
```

# FIG.13

MAGNETIC FLUX DENSITY

MAGNETIC FIELD H

EXP (RD)

EXP (TD)

EP 2 891 996 A1

**EP 2 891 996 A1**

**INTERNATIONAL SEARCH REPORT**

| | International application No. |
|---|---|
| | PCT/JP2012/072083 |

A. CLASSIFICATION OF SUBJECT MATTER
*G06F17/50*(2006.01)i, *G01R33/14*(2006.01)i, *H01F1/16*(2006.01)i, *H01F41/00*
(2006.01)i

According to International Patent Classification (IPC) or to both national classification and IPC

B. FIELDS SEARCHED

Minimum documentation searched (classification system followed by classification symbols)
G06F17/50, G01R33/14, H01F1/16, H01F41/00

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)
CiNii, IEEE Xplore

C. DOCUMENTS CONSIDERED TO BE RELEVANT

| Category* | Citation of document, with indication, where appropriate, of the relevant passages | Relevant to claim No. |
|---|---|---|
| A | WO 2011/114492 A1  (Fujitsu Ltd.), 22 September 2011 (22.09.2011), paragraphs [0024] to [0069] (Family: none) | 1-10 |
| A | JP 7-201001 A  (Victor Company of Japan, Ltd.), 04 August 1995 (04.08.1995), paragraphs [0001] to [0048] (Family: none) | 1-10 |

☐ Further documents are listed in the continuation of Box C.       ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 November, 2012 (08.11.12) | 20 November, 2012 (20.11.12) |

| Name and mailing address of the ISA/ Japanese Patent Office | Authorized officer |
|---|---|
| Facsimile No. | Telephone No. |

Form PCT/ISA/210 (second sheet) (July 2009)

29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011114492 PCT

**Non-patent literature cited in the description**

- **TETSUJI MATSUO ; MASAAKI SHIMASAKI.** Representation Theorems for Stop and Play Models With Input-Dependent Shape Functions. *IEEE TRANSACTIONS ON MAGNETICS,* May 2005, vol. 41 (5), 1548-1551